# EUROPÄISCHE PATENTSCHRIFT

(11) **EP 1 914 033 B1**
(45) Veröffentlichungstag und Bekanntmachung des Hinweises auf die Patenterteilung: **20.04.2011**
(21) Anmeldenummer: 07020002.7
(22) Anmeldetag: 12.10.2007
(51) Int. Cl.: B23K 11/087, B21C 37/08, B21D 51/26, B23Q 7/00, B65G 25/08, B65G 43/10, B23K 37/00, B23K 37/04

(54) **Fördervorrichtungen für Gegenstände mit verschiedenen Grössen ; Schweisseinrichtung mit einer solchen Fördervorrichtung ; Verfahren zum Schweissen von Dosenzargen mit verschiedenen Grössen**
Conveyor device for objects having different sizes ; Welding device with such a conveyor device ; Process of welding of can bodies having different sizes
Dispositif de transport pour objets ayant des tailles différentes ; Dispositif de soudure doté d'un tel dispositif de transport ; Procédé de soudage de corps de boîte ayant des tailles différentes

(30) Priorität: 16.10.2006 CH 16402006; 30.05.2007 CH 8612007
(43) Veröffentlichungstag der Anmeldung: 23.04.2008
(73) Patentinhaber: Soudronic AG, 8962 Bergdietikon (CH)
(72) Erfinder: Schreiber, Peter, 3282 Bargen (CH)
(74) Vertreter: Schalch, Rainer

(56) Entgegenhaltungen:
- US-A- 3 934 324
- US-A- 4 162 382
- US-A- 4 354 086
- US-A- 4 799 585
- US-A- 4 815 581

## Beschreibung

Die Erfindung betrifft eine Fördervorrichtung zur Förderung von Gegenständen von einer ersten Station zu einer Bearbeitungsstation gemäß dem Oberbegriff der Ansprüche 1 und 2 (siehe, z.B., US 4 799 585). Ferner betrifft die Erfindung eine Schweisseinrichtung mit einer solchen Fördervorrichtung gemäss Anspruch 8 sowie ein Schweissverfahren gemäss dem Oberbegriff des Anspruchs 10 (siehe, z.B., US 4 799 585).

Vorrichtungen der genannten Art kommen beispielsweise bei der Herstellung von Dosenzargen zur Anwendung. Die gerundeten, aber noch nicht verschweissten Zargen werden aus einer Rundungsvorrichtung abgegeben und vom ersten Fördermittel in Richtung auf die Zargenschweissstation transportiert und mit einer Anlieferungsgeschwindigkeit für eine Übergabe an ein zweites Fördermittel an die Übergabestelle angeliefert. Das zweite Fördermittel fördert die Dosenzargen in die Schweissstation; es ist bekanntermassen mit einem Kurbeltrieb oder einem Mehrgelenksystem ausgeführt, dessen Beschleunigung und Geschwindigkeit abhängig von der Taktzahl der geförderten Zargen ist und dessen Förderhub im Wesentlichen konstant ist. Das zweite Fördermittel übergibt die Zargen mit einer Geschwindigkeit an die Schweissstation, die im Wesentlichen gleich der Schweissgeschwindigkeit ist. Die Zargen werden durch den Transport der Schweissstation mit konstanter Schweissgeschwindigkeit durch diese hindurch gefördert, wobei gleichzeitig die axial ausgerichteten Kanten verschweisst werden. Beim Schweissen ist ein sehr kleiner Abstand zwischen aufeinander folgenden Zargen erforderlich und die Schweissgeschwindigkeit ist in der Regel kleiner oder höchstens gleich gross wie die Anlieferungsgeschwindigkeit des zweiten Fördermittels. Die Übergabe zwischen dem ersten Fördermittel und dem zweiten Fördemittel geschieht üblicherweise mit Hilfe eines Fördernockens des zweiten Fördermittels, der eine Zarge von hinten anstossend übernimmt und diese beschleunigt, diese dabei stossend über eine Übergabestrecke fördert und nach der kurzen Beschleunigung verzögert, worauf die Zarge vom Transport der Schweissstation übernommen wird und der Fördernocken für die Übernahme der nächsten Zarge an seinen Ausgangsort zurückkehrt. Bei herkömmlichen Fördervorrichtungen bzw. Schweisseinrichtungen ist ein erheblicher Umstellungsaufwand notwendig, wenn die Grösse (bei Dosenzargen die Zargenhöhe bei liegend geförderten Zargen) der geförderten Gegenstände ändert. Dabei muss die Position des ersten Fördermittels der Zargenhöhe angepasst werden, was eine zeitaufwendige Umstellung ergibt. US-A-4 799 585 zeigt eine Fördervorrichtung für Dosenzargen, bei der die Übergabestelle an ein zweites Fördermittel gesteuert werden kann, indem ein Klinkenträger über ein erstes biegelastisches Band hin- und herbewegt wird und die schwenkbare Klinke über ein zweites biegeelastisches Band geschwenkt werden kann. Diese Anordnung ist kompliziert herzustellen und einzustellen. US-A-3 934 324 zeigt eine Anordnung zur Herstellung von Radkränzen mit einem Rundapparat und einer Schweisseinrichtung, wobei eine Fördervorrichtung vorgesehen ist, die von Hand an verschiedene Grössen der Radkränze anpassbar ist.

Der Erfindung liegt die Aufgabe zu Grunde diesen Nachteil zu vermeiden.

Dies wird gemäss einem ersten Aspekt der Erfindung bei der eingangs genannten Fördervorrichtung mit den Merkmalen des Anspruchs 1 erreicht

Dadurch, dass die Steuereinrichtung die Übergabestelle bestimmen kann oder eine extern bestimmte Übergabestelle übernehmen kann und die ersten und zweiten Fördermittel so steuert, dass die Übergabestelle der bestimmten Stelle entspricht, kann eine Anpassung an eine geänderte Grösse des Gegenstandes in einem gewissen Bereich auf einfache Weise erfolgen, ohne dass dabei die Lage bzw. der Abstand des ersten Fördermittels zur Schweissstation geändert werden muss. Die Bestimmung der Übergabestelle erfolgt dabei insbesondere in Abhängigkeit von der Länge des Gegenstandes in Förderrichtung und somit bei liegend geförderten Zargen von der Zargenhöhe. Dabei kann der Förderhub des zweiten Fördermittels für einen grossen Bereich der Zargenhöhe im Wesentlichen gleich bleiben. Dabei umfasst das zweite Fördermittel eine Hebe- und Senkeinrichtung, durch welche ein Förderelement, insbesondere ein einziges Förderelement, des zweiten Fördermittels steuerbar an beliebiger Stelle entlang des Förderhubes anhebbar und absenkbar ist, so dass die Übergabestelle durch Absenken, nach welchem der Fördernocken den Gegenstand fördern kann, im Bereich des Förderhubes frei wählbar ist und der Moment des Zurückfahrens in Gegenrichtung der Förderrichtung durch Anheben, wodurch das Förderelement am nachfolgenden Gegenstand vorbei zurück fahren kann, ebenfalls im Bereich des Förderhubes frei wählbar ist. Dabei ist das Förderelement durch die Lineareinheit entlang einer Linearführung verschiebbar ist, und dass die Linearführung durch eine Hebe- und Senkeinrichtung anhebbar und absenkbar:

Gemäss einem weiteren Aspekt der Erfindung wird die Aufgabe gemäss Anspruch 2 dadurch gelöst, dass das zweite Fördermittel mit einer Linearfördereinheit versehen ist und steuerbar einen variablen Förderhub ausführen kann. Auch dabei umfasst das zweite Fördermittel eine Hebe- und Senkeinrichtung, durch welche ein Förderelement, insbesondere ein einziges Förderelement, des zweiten Fördermittels steuerbar an beliebiger Stelle entlang des Förderhubes anhebbar und absenkbar ist, so dass die Übergabestelle durch Absenken, nach welchem der Fördernocken den Gegenstand fördern kann, im Bereich des Förderhubes frei wählbar ist und der Moment des Zurückfahrens in Gegenrichtung der Förderrichtung durch Anheben, wodurch das Förderelement am nachfolgenden Gegenstand vorbei zurück fahren kann, ebenfalls im Bereich des Förderhubes frei wählbar ist. Dabei ist bevorzugt, dass das Förderelement durch die Lineareinheit entlang einer Linearführung verschiebbar ist, und die Linearführung ist durch eine Hebe- und Senkeinrichtung anhebbar und absenkbar.

Auf diese Weise kann ebenfalls die Position des ersten Fördermittels für einen weiten Bereich der Zargenhöhe unverändert bleiben und die Anpassung der Fördervorrichtung erfolgt bei im Wesentlichen gleich bleibender Übergabestelle über die Hubverstellung.

Beide Aspekte der Erfindung können einzeln oder in Kombination vorgesehen sein.

Bei einer Schweisseinrichtung wird die Aufgabe gemäss Anspruch 8 gelöst. Bei einem Verfahren zum Schweissen von Dosenzargen wird die Aufgabe mit den Merkmalen des Anspruchs 10 gelöst.

Bei einer bevorzugten Ausführungsform der Fördervorrichtung, bzw. der Schweisseinrichtung und des Verfahrens ist durch die Steuereinrichtung die Übergabestelle in Abhängigkeit von der Länge (BBH) des Gegenstandes in Förderrichtung bestimmbar oder übernehmbar bzw. ist durch die Steuereinrichtung der Förderhub (X) in Abhängigkeit von der Länge (BBH) des Gegenstandes in Förderrichtung bestimmbar oder übernehmbar.

Bevorzugt ist weiter, dass die Fördervorrichtung ein erstes Fördermittel aufweist, das einen elektrischen Servomotorantrieb mit einem Kettenförderer oder einem Riemenförderer mit daran angeordneten Förderelementen bzw. Fördernocken umfasst und das zweite Fördermittel eine Linearfördereinheit mit insbesondere nur einem von dieser angetriebenen Förderelement umfasst.

Ferner ist bevorzugt, dass das zweite Fördermittel eine Hebe- und Senkeinrichtung umfasst, durch welche ein Förderelement, insbesondere ein einziges Förderelement, des zweiten Fördermittels steuerbar an beliebiger Stelle entlang des Förderhubes anhebbar und absenkbar ist, so dass die Übergabestelle durch Absenken, nach welchem der Fördernocken den Gegenstand fördern kann, im Bereich des Förderhubes frei wählbar ist und der Moment des Zurückfahrens in Gegenrichtung der Förderrichtung durch Anheben, wodurch das Förderelement am nachfolgenden Gegenstand vorbei zurück fahren kann, ebenfalls im Bereich des Förderhubes frei wählbar ist. Dabei ist bevorzugt, dass das Förderelement durch die Lineareinheit entlang einer Linearführung verschiebbar ist, und dass die Linearführung durch eine Hebe- und Senkeinrichtung anhebbar und absenkbar ist. Dabei kann die Linearführung mittels elastisch biegbaren oder durch mindestens ein Gelenk knickbaren Haltemitteln anhebbar und absenkbar mit einem festen Teil der Fördervorrichtung verbunden sein. Bei einer anderen Ausführungsform ist das Förderelement über biegbare oder knickbare Haltemittel an einem linear bewegbaren Teil der Linearfördereinheit angeordnet. Als biegbares Haltemittel kann insbesondere mindestens eine Blattfeder vorgesehen sein.

Im Folgenden werden Ausführungsbeispiele der Erfindung anhand der Zeichnungen näher erläutert. Dabei zeigt
Figur 1 schematisch eine Schweisseinrichtung mit einer Fördereinrichtung zur Erläuterung des einen Aspektes der Erfindung;
Figur 2 schematisch eine Schweisseinrichtung mit einer Fördereinrichtung zur Erläuterung des anderen Aspektes der Erfindung;
Figur 3 ein Diagramm zur Veranschaulichung verschiedener Geschwindigkeitsverläufe des zweiten Fördermittels;
Figur 4 eine erste Ausführungsform des zweiten Fördermittels in schaubildlicher Darstellung;
Figur 5 eine zweite Ausführungsform des zweiten Fördermittels in schaubildlicher Darstellung; und
Figur 6 ein Flussdiagramm.

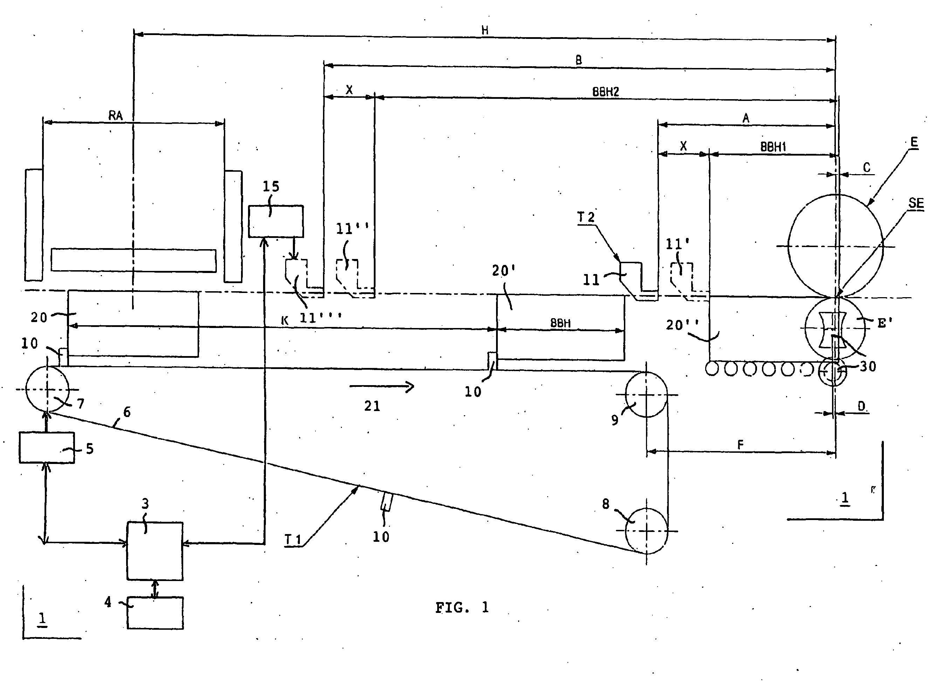

Figur 1 zeigt in stark schematisierter Form eine Schweisseinrichtung für Behälterzargen, insbesondere Dosenzargen. Die Schweisseinrichtung 1 weist dabei eine Fördervorrichtung gemäss einem Ausführungsbeispiel der Erfindung auf, welche die beiden Fördermittel T1 und T2 umfasst. Weiter weist die Schweisseinrichtung 1 auf bekannte Weise Schweisselektroden E und E' auf, welche an einem nicht dargestellten Oberarm und Unterarm der eigentlichen:Schweissstation bzw. Schweissmaschine der Schweisseinrichtung befestigt sind. Es kann eine Drahtzwischenelektrode zur Schweissung verwendet werden. Vor der Schweissebene, welche mit der Linie SE angedeutet ist, befindet sich auf bekannte Weise ein Kalibrierwerkzeug, welches durch die Diabolo-Rollen 30 angedeutet ist und auf bekannte Weise das Schweissgut bzw. die Dosenzargen in die für die Schweissung richtige Kantenlage bringt. Die Zargenkalibrierung D befindet sich dabei immer vor der Schweissebene SE. Der Einschub einer zu schweissenden Dosenzarge in die Schweissmaschine bzw. zwischen die Schweissrollen erfolgt mit dem Fördermittel T2, von welchem der Fördernocken 11 in verschiedenen Positionen 11 bis 11''' dargestellt ist. Dies wird nachfolgend noch genauer erläutert. Das erste Fördermittel T1 fördert das Schweissgut bis zur Übernahme durch das zweite Fördermittel T2. Im gezeigten Beispiel der Schweisseinrichtung wird das Schweissgut, bzw. die gerundete Dosenzarge, am Ausgang einer Rundungsstation RA abgegeben und dort vom ersten Fördermittel T1 mit einem seiner Förderelemente 10, insbesondere einem Fördernocken 10, beaufschlagt. Im gezeigten Beispiel ist dabei der Förderweg des Fördermittels 1 linear und auch der Förderweg des Fördermittels T2 ist linear und gleichgerichtet zum Förderweg des Fördermittels T1. Bei anderen Ausführungsformen der Erfindung könnte dies auch abweichend ausgeführt sein.

Das erste Fördermittel T1 ist in der bevorzugten Ausführungsform ein Ketten- oder Riemenförderer mit z.B. zwei parallel laufenden Ketten oder Riemen, an welchen Fördernocken 10 bzw. Fördernockenpaare angeordnet sind. Deren Abstand voneinander in Förderrichtung ist in der Figur mit K bezeichnet. Die Ketten oder die Riemen 6 werden durch einen Antrieb 5 angetrieben, welcher im gezeigten Beispiel auf das Umlenkrad 7 einwirkt. Weitere Umlenkräder 9 und 8 sind benachbart den Schweisselektroden angeordnet und definieren hier für das Fördermittel T1 dessen Abstand F von der Schweissebene SE. Der Antrieb 5 des Fördermittels T1 ist bevorzugterweise ein elektrischer Servomotorantrieb und insbesondere ein Antrieb, der durch die Steuerung 3 zum Starten und Stoppen und in seiner Geschwindigkeit und ggf. seinem Geschwindigkeitsverlauf steuerbar ist. Die Steuerung 3 ist bevorzugt mit einer Eingabe 4 versehen. Das Fördermittel T1 übernimmt somit eine aus der Rundungsstation RA austretende gerundete Dosenzarge 20 und fördert diese gesteuert durch die Steuerung 3 in Pfeilrichtung 21 auf einer nicht gezeigten Führung in Richtung auf die Schweissmaschine bzw. die Schweisselektroden. Die Förderung mit dem Fördermittel T1 und den jeweiligen Fördernockenpaaren 10 erfolgt dabei so lange, bis an einer Übergabestelle das Förderelement 11 des Fördermittels T2 die Förderung der Dosenzarge übernimmt. Das Fördermittel T2 könnte ebenfalls ein umlaufendes, steuerbares Fördermittel ähnlich dem Fördermittel T1 sein. Bevorzugt ist indes das Fördermittel T2 ein Fördermittel mit einer Linearfördereinheit und insbesondere mit einem einzigen durch diese Linearfördereinheit hin- und her bewegbaren Förderelement 11. Der entsprechende Antrieb ist schematisch mit 15 dargestellt und wird ebenfalls durch die Steuerung 3 gesteuert. Linearfördereinheiten sind dem Fachmann bekannt und die Ausführung einer solchen wird daher hier nicht weiter erläutert, da eine beliebige, eine lineare Bewegung des Förderelementes bewirkende, steuerbare Linearfördereinheit verwendbar ist.

Die Steuerung 3 steuert die Übergabe an der geeigneten Übergabestelle zwischen dem Transportmittel T1 und dem Transportmittel T2. Dies kann derart erfolgen, dass die Steuerung die geeignete Übergabestelle selber berechnet, indem ihr über die Eingabe 4 die Grösse des Schweissgutes 20 in Förderrichtung, im gezeigten Beispiel jeweils die Zargenhöhe BBH eingegeben wird. Aus dieser Zargenhöhe und dem Einschubweg bzw. Förderhub X, der vom Fördermittel T2 bewirkt wird, kann die Steuerung aus der vorgegebenen Kinematik der beiden Fördermittel T1 und T2 die geeignete Übergabestelle berechnen. Die Übergabestelle kann auch auf einem separaten Rechner berechnet werden und über das Eingabemittel 4 oder durch eine Datenverbindung der Steuerung 3 mit diesem externen Rechner in die Steuerung eingegeben werden. Ferner kann die Übergabestelle empirisch ermittelt werden, indem Testzargen der gewünschten Zargenhöhe durch T1 und T2 sehr langsam oder schrittweise gefördert werden und die optimale Übergabestelle für diese Zargenhöhe bei gleich bleibendem Abstand von T1 zu der Schweissebene SE durch Beobachtung und Einstellung ermittelt und an der Steuerung eingegeben wird. Geht man bei einer ersten Variante der Erfindung für die minimale Zargenhöhe BBH1 bis zur maximalen Zargenhöhe BBH2 von einem gleich bleibenden Einschubweg X aus, der vom Fördermittel T2 mit seinem Förderhub bewirkt wird, so ergibt sich für die am nächsten bei der Schweissebene liegende Übergabestelle (für Zargen mit der Höhe BBH1) die Position des Nockens von T2 in dem mit A bezeichneten Abstand von der Schweissebene SE bzw. in der mit ausgezogener Linie dargestellten und mit 11 bezeichneten Stellung des Nockens 11 von T2 und für die am weitesten von der Schweissebene SE weg liegende Übergabestelle (für Zargen der Höhe BBH2) die Position des Nockens, die mit 11''' bezeichnet ist bzw. dem Abstand B entspricht. Je nach Zargenhöhe, die zwischen den Werten BBH1 und BBH2 liegt, ergibt sich eine zwischen diesen Positionen 11 und 11''' liegende Übergabestelle. Es ist für den Fachmann ersichtlich, wie diese in Abhängigkeit von der Zargenhöhe und den geometrischen Verhältnissen, wie sie dargestellt sind, errechnet werden kann bzw. dass diese durch wenige Versuche mit der gewünschten Zargenhöhe einfach ermittelt werden kann. Entsprechend werden dann gemäss der berechneten oder ermittelten Übergabestelle von der Steuerung 3 die Antriebe 5 und 15 gesteuert, so dass der Fördernocken 11 des Transportes T2 die Zarge an der Übergabestelle vom jeweiligen Nocken 10 des Fördermittels T1 übernimmt, z.B. indem dieses entsprechend verlangsamt wird und der Nocken 11 mit höherer Geschwindigkeit diejenige Zarge übernehmen kann, die mit dem Einschubweg X zwischen die Schweissrollen geschoben werden muss. Bei gleich bleibender Geschwindigkeit von T1 wird dagegen T2 zunächst: mit entsprechend höherer Geschwindigkeit für die Übernahme gefahren und bremst dann entlang des Weges X auf die Einschubgeschwindigkeit für die Schweissung ab.

Als bevorzugte Ausführungsform und zugleich als Beispiel für die Kombination der beiden Aspekte der Erfindung, ist ferner vorgesehen, dass bei Unterschreitung der minimalen Zargenhöhe BBH1, die Steuerung oder der externe Rechner oder die die Einstellung empirisch ausführende Person einen variablen, hier längeren, Einschubweg bzw. Förderhub X von T2 einstellt, so dass auch für geringere Zargenhöhe eine Übergabe von T1 auf T2 möglich ist. Entsprechend kann natürlich bei Überschreitung der maximalen Zargenhöhe BBH2 der Einschubweg ebenfalls variiert werden und dann ein kürzerer Einschubweg bzw. Förderhub X gewählt werden.

Die Geschwindigkeiten der verschiedenen Fördermittel werden, wie erläutert, in Funktion der Zargenhöhe BBH, des Nockenabstandes K, der beiden Fördermittel T1 und T2 und dem gewünschten Einschubweg X, und natürlich der Taktrate, also der Anzahl Zargen pro Zeiteinheit, berechnet oder ebenfalls empirisch ermittelt und dann gespeichert. Dies muss hier nicht näher dargelegt werden, da diese Berechnung und/oder Ermittlung aufgrund der geometrischen Verhältnisse für den Fachmann ohne weiteres durchführbar ist. Die Steuerung der Antriebe 5 und 15 wird dann derart gewählt, dass die Übergabe an der entsprechenden Stelle stattfinden kann. Die entsprechende Bewegungsfreiheit, die der Servoantrieb 5 ergibt und die die Linearfördereinheit mit ihrem Antrieb 15.ergibt, ermöglicht dabei die entsprechende Übergabe.:

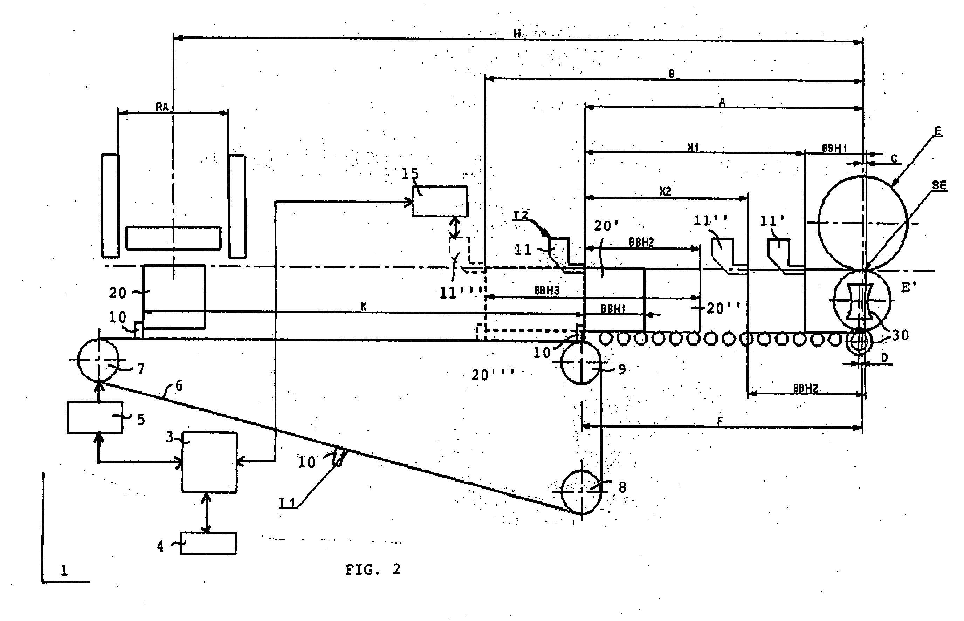

Figur 2 zeigt eine weitere schematische Darstellung ähnlich derjenigen von Figur 1, worin auch dieselben Bezugszeichen wiederum dieselben Elemente angeben. Auch hier handelt es sich um eine Schweisseinrichtung zur Herstellung von Dosenzargen. Die Rundstation RA hat den Abstand H zur Schweissebene SE. Dieser kann je nach Geschwindigkeitsverlauf des Fördermittels T1 konstant sein oder kann ebenfalls in der Grundeinstellung an die gewünschte Zargenhöhe angepasst werden. Die jeweilige Zarge 20, 20' und 20" wird auch bei diesem Beispiel mit Fördernocken 10 des Transportmittels T1 bis zur Übergabestelle gefördert und dort an das zweite Fördermittel T2 mit den Förderelementen 11 abgegeben. Bei dieser Ausführungsform ist das Fördermittel T2 mit einer Linearfördereinheit und einem einzigen Fördernocken 11 ausgestattet. Für die Linearfördereinheit gilt ebenfalls, was bei der vorherigen Ausführungsform erläutert worden ist. Die Übergabestelle von T1 auf T2 wird bei dieser Ausführungsform ausgehend von der längsten normalerweise vorkommenden Zargenhöhe BBH2 (Zarge 20'') und dem minimalen Förderhub X2 des Transportmittels T2 bzw. der Linearfördereinheit bestimmt. Diese Bestimmung der Übergabestelle kann wiederum rechnerisch oder empirisch erfolgen. In der Figur 2 ist die Übergabestelle mit dem Fördernocken 11 und der Zarge 20' angegeben. Die Übergabestelle kann je nach Zargenhöhe vor oder (wie dargestellt) nach dem Zentrum des Umlenkrades 9 des Fördermittels T1 liegen. Bei der an Hand dieses Ausführungsbeispiels erläuterten zweiten Variante der Erfindung bleibt die Übergabestelle im Wesentlichen am selben Ort und der Förderhub des Fördermittels T2 wird in Abhängigkeit von der Zargenhöhe variabel ausgestaltet. In der Figur ist dies ersichtlich, indem für die normalerweise grösste Zargenhöhe BBH2 bzw. die Zarge 20'' der kleinste üblicherweise verwendete Einschubweg bzw. Förderhub X2 vorgesehen ist. Wird die Zargenhöhe auf die kleinste üblicherweise vorkommende Zargenhöhe BBH1 reduziert, so wird dafür der Einschubweg bzw. Förderhub auf die Länge X1 vergrössert. Der maximale Hub X1 wird dabei durch die zur Verfügung stehende Taktzeit die maximalen Beschleunigungen und Geschwindigkeiten und die minimale Zargenhöhe definiert. Für zwischen den Zargenhöhen BBH1 und BBH2 liegende Zargenhöhen wird entsprechend ein zwischen X2 und X1 liegender Förderhub von T2 gewählt. Dies kann durch die Steuerung 3 erfolgen, wenn in diese die Zargenhöhe eingegeben wird oder der Förderhub kann über Eingabemittel 4 an die Steuerung eingegeben werden. Auch bei dieser Ausführungsform kann der Förderhub empirisch mit Testzargen und einem langsamen oder schrittweisen Betriebsmodus ermittelt werden.

Auch bei dieser Ausführungsform ist es ergänzend möglich, dass bei einer Überschreitung der Zargenhöhe BBH2 die Übergabestelle von T1 auf T2 in Richtung des Rundapparates verschoben wird, dass also zusätzlich der erste Aspekt der Erfindung eingesetzt wird. Dies ist in der Figur mit einer Zargenhöhe BBH3 bzw. einer Zarge 20"' angedeutet, welche die üblicherweise maximale Zargenhöhe BBH2 überschreitet und welche an einer Übergabestelle übernommen wird, die in der Figur mit dem Fördernocken 11'" dargestellt ist. Damit ist es sogar für Übergrössen möglich, auf eine Verstellung des Transportes T1 bzw. des Abstandes F zu verzichten, welche, wie einleitend erwähnt, sehr zeitaufwändig ist. Für diese übergrosse Zarge 20''' erfolgt somit eine Verstellung der Übergabestelle gemäss dem anhand von Figur 1 erläuterten Beispiel. Es ist daraus ersichtlich, dass beide Ausführungsvarianten der Patentansprüche 1 und 2 gemeinsam oder getrennt voneinander vorkommen können, so dass die kennzeichnenden Merkmale beider Ansprüche mit "und/oder" verknüpft auch im selben Patentanspruch vorgesehen sein könnten. Bei der Ausführungsform von Figur 2, bei der die horizontale Bewegung von T2 nicht mehr einen konstanten. Hub ausführt, sondern durch eine Linearfördereinheit einen variablen Hub ermöglicht, kann somit die Position F des Fördermittels T1 für einen Zargenhöhenbereich, zum Beispiel in der Grösse von 50 bis 200 Millimetern Zargenhöhe, konstant gehalten werden.

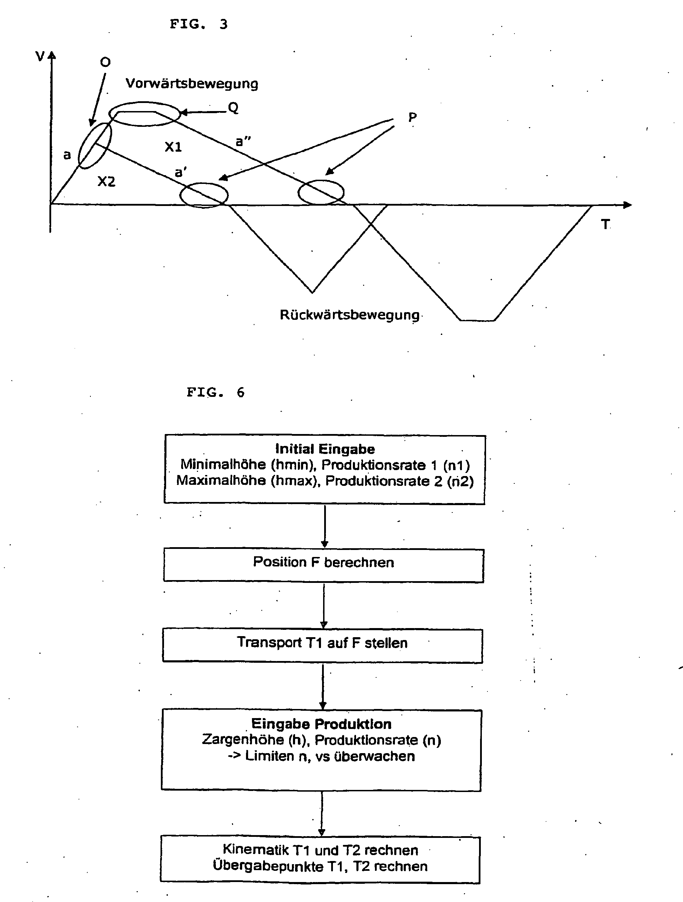

Figur 3 stellt mehrere mögliche Geschwindigkeitsverläufe in Abhängigkeit der Zeit für die Förderbewegung des Fördermittels T2 dar. Die Beschleunigung a und die Verzögerungen a' und a" sowie die Geschwindigkeiten werden so gewählt, dass sie möglichst immer gleich sind oder der Taktzahl entsprechend angepasst werden. Die Übernahme der Zarge durch das Fördermittel T2 erfolgt im Bereich O, wobei die Anlieferungsgeschwindigkeit der Zarge durch das Fördermittel T1 kleiner sein muss als die Übernahmegeschwindigkeit des Fördermittels T2. Die Kurvenformen für die Geschwindigkeit im Bereich Q des Förderhubes sind verschieden wählbar, wie zum Beispiel in Form eines Dreieckprofils, eines Trapezes, als gerundeter Verlauf, als Polynome etc. Die Übergabe der Zarge an die Schweissstation erfolgt kurz vor dem Ende des Hubes X1 bzw. X2 oder dazwischen liegender Hübe im Bereich P von Figur 3. Die Übergabegeschwindigkeit an die Schweissstation liegt im Bereich der Schweissgeschwindigkeit der Zarge. Der Rückweg des Fördernockens des Fördermittels T2 an seinen Ausgangspunkt wird mit der maximalen Beschleunigung und Geschwindigkeit der Linearfördereinheit ausgeführt. Auch hier sind verschiedene Kurvenformen möglich. Dazu wird der Fördernocken angehoben, was nachfolgend erläutert wird, um somit nicht mit der nächsten Zarge zu kollidieren. Im Bereich der Übergabestelle wird der Fördernocken des Fördermittels T2 mit einer Hebe- und Senkeinrichtung vor der Übernahme der Zarge abgesenkt und diese auf die geschilderte Weise zur Schweissstation gefördert. Dort wird sie kalibriert und mit der Geschwindigkeit entsprechend der Schweissgeschwindigkeit der Schweissstation übergeben. Im Bereich des vorderen Endes des Hubes X wird der Fördernocken wieder angehoben und kehrt an den Ausgangspunkt zurück, wonach sich der Vorgang wiederholt.

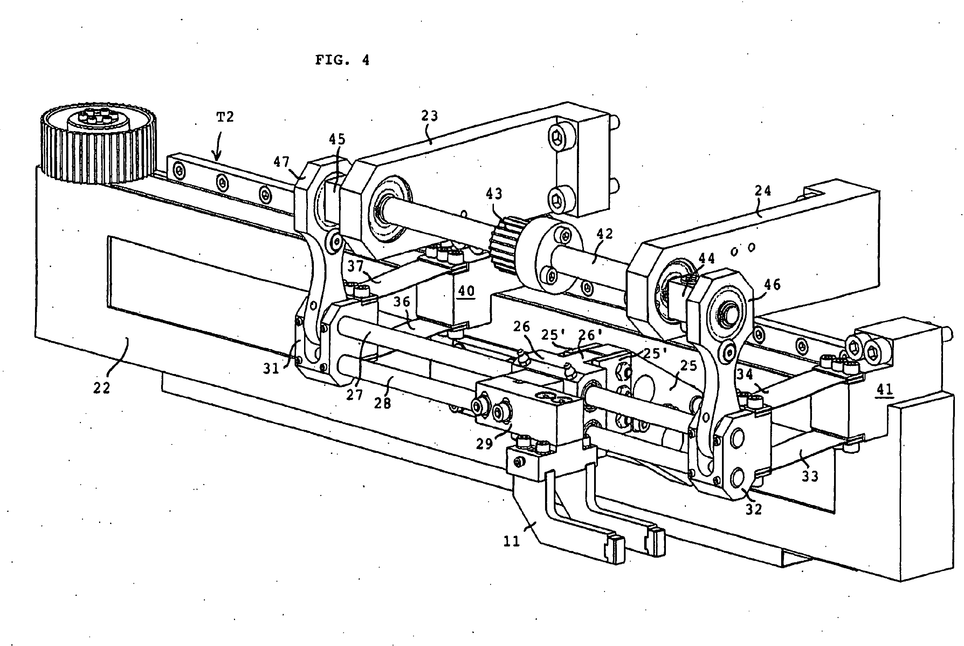

Figur 4 zeigt eine schaubildliche Ansicht einer ersten Ausführungsform des Fördermittels T2 gemäß der Erfindung, welches auf die beschriebene Weise arbeiten kann. Dieses Fördermittel.T2 weist eine maschinenfest angeordnete Linearfördereinheit 22 auf, welche dem Fachmann grundsätzlich bekannt ist und welche hier nicht weiter erläutert wird. Am Schlitten oder einem anderen linear hin- und her bewegbaren Teil der Linearfördereinheit 22 ist ein Mitnehmer 25 befestigt, welcher die Schlittenbewegung der Linearfördereinheit auf einen Halter 26 überträgt, welcher, an Linearführungen 27 und 28 geführt, durch die Linearfördereinheit hin- und her bewegbar ist und über ein Zwischenstück 29 das Förderelement 11 trägt, welches hier ein Förderelement mit zwei Fördernocken ist, damit die Zarge versatzfrei gefördert wird. Die Mitnahme des Halters 26 durch die Linearfördereinheit erfolgt dabei über seitliche Platten 25', welche am Mitnehmer 25 angeordnet sind, und eine Ausnehmung am Mitnehmer 25 bilden, in welche eine Nase 26' des Halters 26 eingreift. Damit ist der Halter 26 durch die Linearfördereinheit mitnehmbar, kann aber gegenüber dem Mitnehmer 25 eine Vertikalbewegung ausführen, indem die Nase 26' zwischen den Halteplatten 25' vertikal verschieblich gehalten ist. Auf diese Weise kann das Heben und Senken des Förderelementes 11 ausgeführt werden, indem dessen Halterung 26 mit den Linearführungen 27 und 28 zusammen gehoben und abgesenkt wird. Diese Linearführungen 27 und 28 sind in Haltestücken 31 und 32 gehalten, welche einerseits über Blattfedern 37 und 36 und andererseits über Blattfedern 34 und 33 an maschinenfesten Halteblöcken 40 und 41 befestigt sind. Die Blattfedern 33-37 erlauben eine Vertikalbewegung der Haltestücke 31 und 32 und damit des Förderelementes 11. Sie erlauben indes keine Bewegung quer zur Blattauslenkung, also keine Bewegung in Richtung der Schlittenbewegung der Linearfördereinheit. Die Auslenkung der Blattfedern bzw. der Haltestücke 31, 32 und damit des Förderelementes wird durch einen Exzenterantrieb bewirkt, welcher eine angetriebene Welle 42 aufweist, die in maschinenfesten Lagerböcken 23 und 2.4 gelagert ist. Die Welle 42 ist über einen nicht dargestellten Antriebsteil des Antriebs 15 der Fördervorrichtung bzw. Schweisseinrichtung antreibbar, welcher in den Figuren 1 und 2 dargestellt ist und der von der Steuerung 3 gesteuert wird. Von diesem Antriebsteil ist in Figur 4 nur das Zahnriemenrad 43 auf der Welle 42 dargestellt, welches die Drehung dieser Welle zum Beispiel über einen Servomotor des ansonsten nicht weiter dargestellten Antriebes 15 erlaubt. Endseitig an der Welle 42 sind Exzenterstücke 44 und 45 angeordnet, welche über Verbindungsstangen 46 und 47 die Haltestücke 32 und 31 entsprechend der Exzentrizität der Stücke 44 und 45 auf- und ab bewegen können, womit das Heben und Senken des Förderelements 11 bewirkt wird. Die Dimensionen und das Material der Blattfedern 33-37 sind so gewählt, dass die maximalen zulässigen Spannungen im oberen und unteren Totpunkt des Exzenters nicht überschritten werden. Durch den Einsatz von mehreren, in definiertem Abstand parallel angeordneten Blattfedern bleibt das Förderelement 11 mit seinen beiden Fördernocken immer ausgerichtet. Die Blattfedern müssen nicht eingestellt werden und sind verschleissfrei. Natürlich können anstelle der Blattfedern auch knickbare Halter mit einem Gelenk vorgesehen werden, doch ist dies aufwändiger als die bevorzugte Lösung mit Blattfedern.

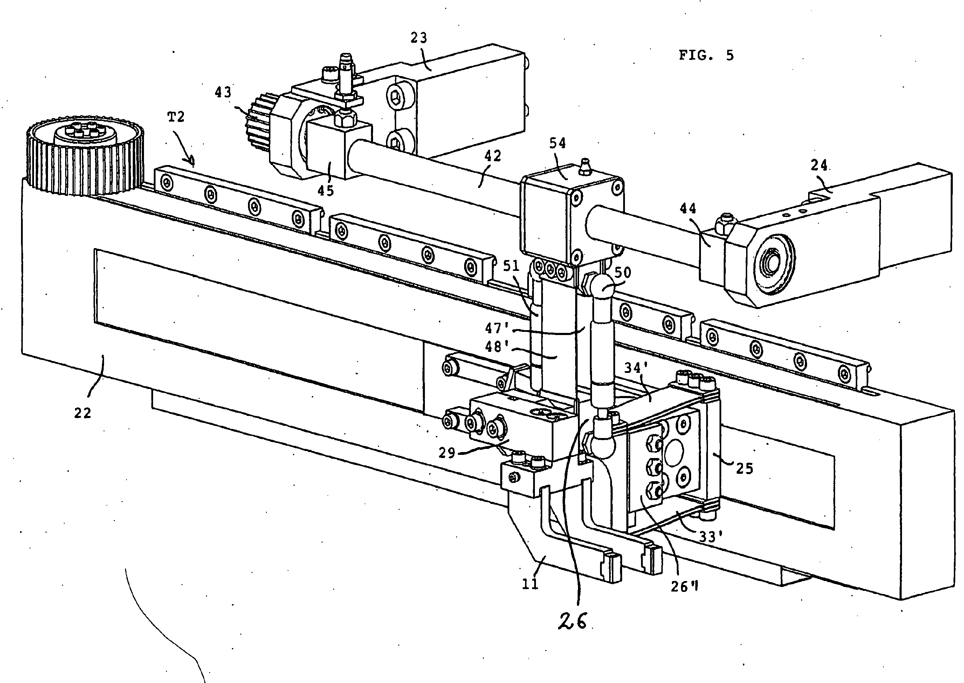

Figur 5 zeigt eine weitere Ausführungsform des zweiten Fördermittels T2 gemäß der Erfindung, wobei gleiche Bezugsziffern wiederum funktionell gleiche Elemente bezeichnen. Auch hier ist eine an der Fördervorrichtung bzw. Schweisseinrichtung maschinenfest angeordnete Linearfördereinheit 22 vorgesehen, an deren hin- und herbewegbaren Schlitten ein Mitnehmer 25 angeordnet ist. Es sind wiederum maschinenfeste Lagerböcke 23 und 24 vorgesehen. Exzentrisch an Lagerstellen in den Lagerböcken 23 und 24 angeordneten Exzenterstücke 45 und 44 sind durch den Hebe- und Senkantrieb, der Teil des Antriebs 15 ist, bewegbar, was wiederum durch das Zahnriemenrad 43 angedeutet ist. Eine Drehbewegung des Rades:43 bewegt die Linearführung 42 und das darauf angeordnete Lagergehäuse 54, in welchem sich ein radial und axial auf der Linearführung 42 verschiebbares Lager befindet, in vertikaler und seitlicher Richtung. Die erwünschte Vertikalbewegung wird zum Heben und Absenken des Fördernockens 11 auf diesen übertragen, wozu hier zwei Blattfedern 47' und 48' vorgesehen sind, welche parallel und im Abstand voneinander angeordnet sind. Ein Ausbuchten der Blattfedern 47' und 48' wird dabei durch Federelemente 50 und 51 verhindert, welche die Blattfedern vorspannen. Der Halter 26, welcher über das Zwischenstück 29 das Förderelement 11 trägt wird über den Mitnehmer 25 durch die Linearfördereinrichtung 22 angetrieben. Durch die Mitnehmerplatten, von denen in der Figur nur die vordere Platte 26" ersichtlich ist, ist der Halter 26 gegenüber dem Mitnehmer 25 vertikal und seitlich verschiebbar und somit durch den Antrieb bzw. die exzentrisch bewegte Linearführung 42 anhebbar und absenkbar. Der Halter 26 und damit das Förderelement 11 wird seitlich durch zusätzliche Blattfedern 33' und 34' parallel gehalten, welche am Mitnehmer 25 der Linearfördereinheit befestigt sind.

Figur 6 zeigt ein Flussdiagramm des Vorgehens bei der Variante mit Bestimmung der Übergabestelle, wobei dies in den beiden letzten Rechtecken des Diagramms dargestellt ist. In den drei vorhergehenden Rechtecken wird für eine Initialisierung der Schweisseinrichtung 1 mit den Fördermitteln T1 und T2 die Minimalhöhe und die Maximalhöhe der Zargen und die gewünschte Produktionsrate eingegeben, worauf die Steuerung oder ein externer Rechner zunächst die Position F berechnet, welche das Fördermittel T1 in einen definierten Abstand zur Schweissebene bringt. Entsprechend wird dann das Fördermittel T1 auf den Abstand F zur Schweissebene eingestellt. Nachfolgend können dann die Berechnung oder die versuchsweise Ermittlung der Übergabestelle und später die Steuerung der Übergabe und/oder die Berechnung oder Ermittlung von X entsprechend dem bereits erläuterten Vorgehen erfolgen.

Gemäss den bevorzugten Aspekten der Erfindung wird somit bei einer Schweisseinrichtung eine Fördervorrichtung mit einem ersten Fördermittel und einem zweiten Fördermittel verwendet, zwischen welchen das zu schweissende Gut übergeben wird. Eine Steuereinrichtung bestimmt dabei die Übergabestelle und/oder den Förderhub des zweiten Fördermittels und steuert die Fördermittel so, dass die Übergabe an der bestimmten Stelle und/oder mit dem bestimmten Förderhub erfolgt. Damit kann die Umrüstung der Einrichtung auf verschiedene Grössen des Schweissgutes rasch erfolgen.

## Patentansprüche

1. Fördervorrichtung zur Förderung von Gegenständen (20, 20', 20'') von einer ersten Station (RA) zu einer Bearbeitungsstation (E, E'), umfassend ein erstes steuerbares Fördermittel (T1) mit einem ersten Förderweg, ein zweites steuerbares Fördermittel (T2) mit einem zweiten Förderweg, wobei sich der erste Förderweg und der zweite Förderweg zum Teil decken und ein vom ersten Fördermittel geförderter Gegenstand im Deckungsbereich der Förderwege an einer Übergabestelle vom zweiten Fördermittel übernehmbar ist, und eine Steuereinrichtung (3), die mit den steuerbaren Antriebsmitteln (5, 15) der Fördermittel verbunden ist, **dadurch gekennzeichnet, dass** durch die Steuereinrichtung (3) die Übergabestelle bestimmbar oder eine extern bestimmte Übergabestelle übernehmbar ist, und die Übergabe der Fördermittel (T1, T2) im Betrieb der Vorrichtung derart steuerbar ist, dass sie an der bestimmten Stelle erfolgt, wobei das zweite Fördermittel (T2) eine Linearfördereinheit (22) und eine Hebe- und Senkeinrichtung umfasst, durch welche ein Förderelement (11) des zweiten Fördermittels (T2) steuerbar an beliebiger Stelle entlang des Förderhubes anhebbar und absenkbar ist und das Förderelement (11) entlang einer Linearführung (27, 28; 42) durch die Linearfördereinheit (22) verschiebbar ist und die Linearführung durch eine Hebe- und Senkeinrichtung anhebbar und absenkbar ist.

2. Fördervorrichtung zur Förderung von Gegenständen (20, 20', 20") von einer ersten Station (RA) zu einer Bearbeitungsstation (E, E'), umfassend ein erstes steuerbares Fördermittel (T1) mit einem ersten Förderweg, ein zweites steuerbares Fördermittel (T2) mit einem zweiten Förderweg, wobei sich der erste Förderweg und der zweite Förderweg zum Teil decken und ein vom ersten Fördermittel geförderter Gegenstand im Deckungsbereich der Förderwege an einer Übergabestelle vom zweiten Fördermittel übernehmbar ist, und eine Steuereinrichtung (3), die mit den steuerbaren Antriebsmitteln (5, 15) der Fördermittel verbunden ist,
**dadurch gekennzeichnet, dass** das zweite Fördermittel (T2) als Linearfördereinheit (22) ausgestaltet ist, welcher von der Steuereinrichtung (3) zur Ausführung eines steuerbar variablen Förderhubes steuerbar ist, wobei das zweite Fördermittel (T2) eine Hebe- und Senkeinrichtung umfasst, durch welche ein Förderelement (11) des zweiten Fördermittels (T2) steuerbar an beliebiger Stelle entlang des Förderhubes anhebbar und absenkbar ist und das Förderelement (11) entlang einer Linearführung (27, 28; 42) durch die Linearfördereinheit (22) verschiebbar ist und die Linearführung durch eine Hebe- und Senkeinrichtung anhebbar und absenkbar ist.

3. Fördervorrichtung nach Anspruch 1 oder 2, **dadurch gekennzeichnet, dass** durch die Steuereinrichtung (3) die Übergabestelle in Abhängigkeit von der Länge (BBH) des Gegenstandes (20, 20', 20") in Förderrichtung bestimmbar ist bzw. dass durch die Steuereinrichtung (3) der Förderhub (X) in Abhängigkeit von der Länge (BBH) des Gegenstandes (20, 20', 20") in Förderrichtung bestimmbar ist.

4. Fördervorrichtung nach einem der Ansprüche 1 bis 3, **dadurch gekennzeichnet, dass** das erste Fördermittel (T1) einen elektrischen Servomotorantrieb (5) mit einem Kettenfördermittel oder einem Riemenfördermittel (6) mit daran angeordneten Förderelementen (10) umfasst.

5. Fördervorrichtung nach einem der Ansprüche 1 bis 4, **dadurch gekennzeichnet, dass** die Linearfördereinheit (22) des zweiten Fördermittels (T2) nur ein angetriebenes Förderelement (11) umfasst.

6. Fördervorrichtung nach einem der Ansprüche 1 bis 5, **dadurch gekennzeichnet, dass** das Förderelement (11) mittels elastisch biegbaren oder durch ein Gelenk knickbaren Haltemitteln (33-37; 33', 34') anhebbar und absenkbar an einem festen Teil oder an einem linear verschiebbaren Teil der Fördervorrichtung angeordnet ist.

7. Fördervorrichtung nach Anspruch 6, **dadurch gekennzeichnet, dass** die Haltemittel (33-37; 33', 34') von mindestens einer Blattfeder gebildet werden.

8. Schweissvorrichtung (1) für Behälterzargen, insbesondere für Dosenzargen, umfassend eine Rundungsstation (RA) für die Zargen und eine Schweissstation (E, E') mit Kalibrierwerkzeugmitteln (30) und angetriebenen Schweissrollen und einer Fördervorrichtung nach einem der Ansprüche 1 bis 7 zur Förderung der Dosenzargen von der Rundungsstation zur Schweissstation.

9. Schweissvorrichtung nach Anspruch 8, **dadurch gekennzeichnet, dass** durch die Steuerung der Einschubweg (X) in die Schweissstation durch das zweite Fördermittel im Wesentlichen konstant und unabhängig von der Gegenstandslänge bzw. Zargenhöhe bestimmt ist und die Anpassung an unterschiedliche Gegenstandslängen bzw. Zargenhöhen durch die Änderung der Übergabestelle erfolgt, und/oder, dass durch die Steuerung der Einschubweg (X) in die Schweissstation durch das zweite Fördermittel (T2) im Wesentlichen variabel und abhängig von der Gegenstandslänge bzw. Zargenhöhe bestimmt ist.

10. Verfahren zum Schweissen von Dosenzargen, bei welchem die Zargen von einer Rundungsstation (RA) für die Zargen entlang eines Gesamtförderweges einer Schweissstation (E, E') mit Kalibrierwerkzeugmitteln (30) und angetriebenen Schweissrollen zugeführt werden, wozu eine Fördervorrichtung mit ersten und zweiten Fördermitteln (T1 und T2) mit erstem und zweiten Förderweg vorgesehen ist, zwischen welchen entlang des Gesamtförderweges eine Übergabe der Zargen erfolgt, wobei der Einschubweg (X) in die Schweissstation durch das zweite Fördermittel (T2) im Wesentlichen konstant und unabhängig von der Zargenhöhe gehalten wird und die Anpassung an unterschiedliche Zargenhöhen durch die Änderung der Übergabestelle vorgenommen wird, und/oder, dass der Einschubweg (X) in die Schweissstation durch das zweite Fördermittel (T2) im Wesentlichen variabel und abhängig von der Gegenstandslänge bzw. Zargenhöhe bestimmt wird, **dadurch gekennzeichnet, dass** das zweite Fördermittel (T2) eine Linearfördereinheit (22) und eine Hebe- und Senkeinrichtung umfasst, durch welche ein Förderelement (11) des zweiten Fördermittels steuerbar an beliebiger Stelle entlang des Förderhubes anhebbar und absenkbar ist und das Förderelement (11) entlang einer Linearführung (27, 28; 42) durch die Linearfördereinheit (22) verschiebbar ist und die Linearführung durch eine Hebe- und Senkeinrichtung anhebbar und absenkbar ist.

## Claims

1. Conveyor for conveying objects (20, 20', 20") from a first station (RA) to a processing station (E, E'), comprising a first controllable conveying means (T1) with a first conveying path, a second controllable conveying means (T2) with a second conveying path, wherein the first conveying path and the second conveying path partly overlap and an object conveyed by the first conveying means can be taken over by the second conveying means in a transfer position in the overlapping area of the conveying paths, and a control installation (3), which is connected to the controllable actuating means (5, 15) of the conveying means, **characterized in that** the transfer position is determinable by the control installation (3) or an externally determined transfer position can be adopted, and the transfer of the conveying means (T1, T2) is controllable during the operation of the conveyor in such a way that it takes place at the determined position, wherein the second conveying means (T2) comprises a linear conveying entity (22) and a lifting and lowering installation, by means of which a conveying element (11) of the second conveying means (T2) can be lifted and lowered in a controlled way at an arbitrary position along the conveying stroke and the conveying element (11) is displaceable by the linear conveying entity (22) along a linear guidance (27, 28; 42) and the linear guidance can be lifted and lowered by means of a lifting and lowering installation.

2. Conveyor for conveying objects (20, 20', 20") from a first station (RA) to a processing station (E, E'), comprising a first controllable conveying means (T1) with a first conveying path, a second controllable conveying means (T2) with a second conveying path, wherein the first conveying path and the second conveying path partly overlap and an object conveyed by the first conveying means can be taken over by the second conveying means in a transfer position in the overlapping area of the conveying paths, and a control installation (3), which is connected to the controllable actuating means (5, 15) of the conveying means, **characterized in that** the second conveying means (T2) is formed as a linear conveying entity (22), which is controllable by the control installation (3) in order to perform a controllable, variable conveying stroke, wherein the second conveying means (T2) comprises a lifting and lowering installation, by means of which a conveying element (11) of the second conveying means (T2) can be lifted and lowered in a controlled way at an arbitrary position along the conveying stroke and the conveying element (11) is displaceable by the linear conveying entity (22) along a linear guidance (27, 28; 42) and the linear guidance can be lifted and lowered by means of a lifting and lowering installation.

3. Conveyor according to claim 1 or 2, **characterized in that** the transfer position is determinable by the control installation (3) depending on the length (BBH) of the object (20, 20', 20") in conveying direction, or that the conveying stroke (X) is determinable by the control installation (3) depending on the length (BBH) of the object (20, 20', 20") in conveying direction.

4. Conveyor according to one of the claims 1 to 3, **characterized in that** the first conveying means (T1) comprises an electric servo motor actuator (5) with a chain conveyor or a belt conveyor (6) with conveying elements (10) arranged thereto.

5. Conveyor according to one of the claims 1 to 4, **characterized in that** the linear conveying entity (22) of the second conveying means (T2) comprises only an actuated conveying element (11).

6. Conveyor according to one of the claims 1 to 5, **characterized in that** the conveying element (11) is arranged at a fixed part or a linearly displaceable part of the conveyor, such that it can be lifted and lowered, by means of supporting means (33-37; 33', 34') which can be elastically bent or folded by an articulation.

7. Conveyor according to claim 6, **characterized in that** the supporting means (33-37; 33', 34') are formed by at least a leaf spring.

8. Welding device (1) for container bodies, particularly for can bodies, comprising a rounding station (RA) for the bodies and a welding station (E, E') with means for a calibration tool (30) and actuated welding rollers and a conveyor according to any of the claims 1 to 7 for conveying the can bodies from the rounding station to the welding station.

9. Welding device according to claim 8, **characterized in that** the insertion path (X) into the welding station by means of the second conveying means is determined by the controller to be substantially constant and independent from the object length or the body height respectively and the adjustment to different object lengths or body heights respectively is done by changing the transfer position, and/or, **in that** the insertion path (X) into the welding station by means of the second conveying means (T2) is determined by the controller to be substantially variable and dependent on the object length or the body height respectively.

10. Method for welding can bodies, in case of which the bodies are supplied from a rounding station (RA) for the bodies along an entire conveying path to a welding station (E, E') with means for a calibration tool (30) and actuated welding rollers, for the purpose of which a conveyor with first and second conveying means (T1 and T2) with a first and a second conveying path, between which a transfer of the bodies takes place along the entire conveying path, is provided, wherein the insertion path (X) into the welding station by the second conveying means (T2) is kept substantially constant and independent from the body height and the adjustment to different body heights is carried out by changing the transfer position, and/or, in that the insertion path (X) into the welding station by means of the second conveying means (T2) is determined to be substantially variable and dependent on the object length or the body height respectively, **characterized in that** the second conveying path (T2) comprises a linear conveying entity (22) and a lifting and lowering installation, by means of which a conveying element (11) of the second conveying means can be lifted and lowered in a controlled way at an arbitrary position along the conveying stroke and the conveying element (11) is displaceable by the linear conveying entity (22) along a linear guidance (27, 28; 42) and the linear guidance can be lifted and lowered by means of a lifting and lowering installation.

## Revendications

1. Convoyeur pour convoyer des objets (20, 20', 20") à partir d'une première station (RA) jusqu'à une station de traitement (E, E'), comportant un premier moyen de convoyage (T1) contrôlable avec un premier chemin de convoyage, un deuxième moyen de convoyage (T2) contrôlable avec un deuxième chemin de convoyage, le premier et le deuxième chemin de convoyage se recoupant partiellement et un objet convoyé par le premier convoyeur étant transférable au deuxième convoyeur dans une position de transfert dans la zone de recoupe, et un dispositif de contrôle (3) qui est connecté aux moyens d'entraînement (5, 15) des moyens de convoyage, **caractérisé en ce que** la position de transfert est déterminable, ou une position de transfert déterminée ailleurs est adoptable à l'aide du dispositif de contrôle (3), et le transfert des moyens de convoyage (T1, T2) est contrôlable en service du convoyeur de façon à se dérouler dans la position déterminée, le deuxième moyen de convoyage (T2) comportant une entité de convoyage linéaire (22) et une installation de relevage et de lamage à l'aide de laquelle un élément de convoyage (11) du deuxième moyen de convoyage (T2) peut être relevé et baissé de manière contrôlable dans une position arbitraire le long de la course de convoyage et l'élément de convoyage (11) peut être déplacé par l'entité de convoyage linéaire (22) le long d'un guidage linéaire (27, 28 ; 42) et le guidage linéaire peut être relevé et baissé à l'aide d'une installation de levage et de lamage.

2. Convoyeur pour convoyer des objets (20, 20', 20") d'une première station (RA) à une station de traitement (E, E'), comportant un premier moyen de convoyage (T1) contrôlable avec un premier chemin de convoyage, un deuxième moyen de convoyage contrôlable (T2) avec un deuxième chemin de convoyage, le premier et le deuxième chemin de convoyage se recoupant partiellement et un objet convoyé par le premier convoyeur étant transférable au deuxième convoyeur dans une position de transfert dans la zone de recoupe, et un dispositif de contrôle (3) qui est connecté aux moyens d'entraînement (5, 15) des moyens de convoyage, **caractérisé en ce que** le deuxième moyen de convoyage (T2) se présente sous forme d'une entité de convoyage linéaire (22) contrôlable par le dispositif de contrôle (3) pour effectuer une variable course de convoyage contrôlable, le deuxième moyen de convoyage comprenant une installation de relevage et de lamage, à l'aide de laquelle un élément de convoyage (11) du deuxième moyen de convoyage (T2) peut être relevé et baissé de manière contrôlable dans une position arbitraire le long de la course de convoyage et l'élément de convoyage (11) peut être déplacé par l'entité de convoyage linéaire (22) le long d'un guidage linéaire (27, 28 ; 42) et le guidage linéaire peut être relevé et baissé à l'aide d'une installation de levage et de lamage.

3. Convoyeur selon la revendication 1 ou 2, **caractérisé en ce que** la position de transfert est déterminable à l'aide du dispositif de contrôle (3) dépendant de la longueur (BBH) de l'objet (20, 20', 20") dans la direction de convoyage ou bien **en ce que** la course de convoyage (X) est déterminable à l'aide du dispositif de contrôle (3) dépendant de la longueur (BBH) de l'objet (20, 20', 20") dans la direction de convoyage.

4. Convoyeur selon l'une quelconque des revendications 1 à 3, **caractérisé en ce que** le premier moyen de convoyage (T1) comporte un entraînement par servomoteur (5) avec un moyen de convoyage à maillons ou un moyen de convoyage à courroies (6) avec des éléments de convoyage (10) y arrangés.

5. Convoyeur selon l'une quelconque des revendications 1 à 4, **caractérisé en ce que** l'entité de convoyage linéaire (22) du deuxième moyen de convoyage (T2) comporte seulement un élément de convoyage (11) entraîné.

6. Convoyeur selon l'une quelconque des revendications 1 à 5, **caractérisé en ce que** l'élément de convoyage (11) est arrangé, à une partie fixe ou à une partie linéairement déplaçable du convoyeur, de manière relevable et abaissable à l'aide des moyens de support (33-37 ; 33', 34') qui sont élastiquement cintrables ou pliables par une articulation.

7. Convoyeur selon la revendication 6, **caractérisé en ce que** les moyens de support (33-37 ; 33', 34') sont formés d'au moins un ressort à lames.

8. Dispositif de soudage (1) pour des corps de boîte, particulièrement pour des corps de canettes, comportant une station d'arrondissement (RA) pour les corps de boîte et une station de soudage (E, E') avec des moyens d'outils de calibration (30) et des rouleaux de soudage entraînés, et un dispositif de convoyage selon une quelconque des revendications 1 à 7 pour le convoyage de corps de boîte à partir de la station d'arrondissement jusqu'à la station de soudage.

9. Dispositif de soudage selon la revendication 8, **caractérisé en ce que** le chemin d'insertion (X) dans la station de soudage par le deuxième moyen de convoyage est défini, à l'aide de la commande, à être essentiellement constant et indépendant de la longueur de l'objet ou bien de la hauteur du corps de boîte et l'ajustement à des différentes longueurs de l'objet ou bien à des différentes hauteurs du corps de boîte est réalisé par le changement de la position de transfert, et/ou **en ce que** le chemin d'insertion (X) dans la station de soudage par le deuxième moyen de convoyage (T2) est défini à être essentiellement variable et dépendant de la longueur de l'objet ou bien de la hauteur du corps de boîte.

10. Procédé pour le soudage de corps de canette, pour lequel les corps de canette sont livrés par une station d'arrondissement (RA) pour les corps le long d'un chemin de convoyage entier d'une station de soudage (E, E') avec des moyens d'outils de calibration (30) et des rouleaux de soudage entraînés, un dispositif de convoyage étant prévu pour cela, avec des premiers et deuxièmes moyens de convoyage (T1 et T2), entre lesquels un transfert des corps de canette se déroule le long de l'entier chemin de convoyage, le chemin d'insertion (X) dans la station de soudage étant gardé essentiellement constant et indépendant de la hauteur du corps de canette par le moyen de convoyage (T2) et l'ajustement à des différentes hauteurs du corps de canette est réalisé par le changement de la position de transfert, et/ou, le chemin d'insertion (X) dans la station de soudage par le deuxième moyen de convoyage (T2) étant défini à être variable et dépendant de la longueur de l'objet ou bien de la hauteur du corps de canette, **caractérisé en ce que** le deuxième moyen de convoyage (T2) comporte une entité de convoyage linéaire (22) et une installation de relevage et de lamage à l'aide de laquelle un élément de convoyage (11) du deuxième moyen de convoyage (T2) peut être relevé et baissé de manière contrôlable dans une position arbitraire le long de la course de convoyage et l'élément de convoyage (11) peut être déplacé par l'entité de convoyage linéaire (22) le long d'un guidage linéaire (27, 28 ; 42) et le guidage linéaire peut être relevé et baissé à l'aide d'une installation de levage et de lamage.
